# EUROPÄISCHE PATENTSCHRIFT

(11) **EP 2 342 018 B1**
(45) Veröffentlichungstag und Bekanntmachung des Hinweises auf die Patenterteilung: **05.06.2013**
(21) Anmeldenummer: 10751796.3
(22) Anmeldetag: 11.08.2010
(51) Int. Cl.: B02C 15/04, B02C 15/06

(54) **WÄLZMÜHLE**
ROLLER MILL
BROYEUR À ROULEAUX

(30) Priorität: 09.03.2010 DE 102010010752
(43) Veröffentlichungstag der Anmeldung: 13.07.2011
(73) Patentinhaber: Loesche GmbH, 40549 Düsseldorf (DE)
(72) Erfinder: LANGEL, Jörg, 51147 Köln-Porz (DE)
(74) Vertreter: Heim, Florian Andreas
(86) Internationale Anmeldenummer: PCT/EP2010/004922
(87) Internationale Veröffentlichungsnummer: WO 2011/044966

(56) Entgegenhaltungen:
- DE-A1- 4 202 784
- DE-A1- 4 442 099

## Beschreibung

Die Erfindung betrifft eine Wälzmühle gemäß dem Oberbegriff des Anspruchs 1.

Die Erfindung ist insbesondere für Wälzmühlen zur Vermahlung von Zementklinker und Hüttensand für die Baustoffindustrie geeignet. Die Wälzmühlen weisen üblicherweise einen Sichter auf, welcher in der Regel in die Wälzmühle integriert ist, aber auch außerhalb der Wälzmühle angeordnet sein kann.

Aus EP 0 406 644 B1 ist eine Luftstrom-Wälzmühle des LOESCHE-Typs bekannt, bei welcher die Zerkleinerung von Zementklinker oder Hüttensand durch eine Kombination von Mahlwalzen und Präparationswalzen erfolgt. Die Präparationswalzen dienen der Verdichtung und Glättung des Mahlbettes. Jeweils eine Präparationswalze ist einer Mahlwalze zugeordnet und bildet mit dieser ein Walzenpaar. Es sind Luftstrom-Wälzmühlen mit zwei oder drei derartigen Walzenpaaren bekannt, welche symmetrisch und mit gleichem Abstand zueinander angeordnet sind und auf einer rotierenden Mahlschüssel beziehungsweise einem darauf gebildeten Mahlbett abrollen. Dabei ist eine Präparationswalze der jeweils zugeordneten Mahlwalze vorgeschaltet, um das Mahlgut, welches zentral auf die rotierende Mahlschüssel aufgegeben wird und unter Einwirkung der Zentrifugalkraft zu einer Mahlbahn am Schüsselrand wandert, zu überrollen. Dieses Mahlgut besteht aus einer Mischung von gröberen Partikeln des frisch aufgegebenen Materials und kleineren, noch nicht auf Produktfeinheit zerkleinerten Partikeln, die von dem über dem Mahlraum angeordneten Sichter abgewiesen und zum Zentrum der Mahlschüssel zurückgeleitet werden.

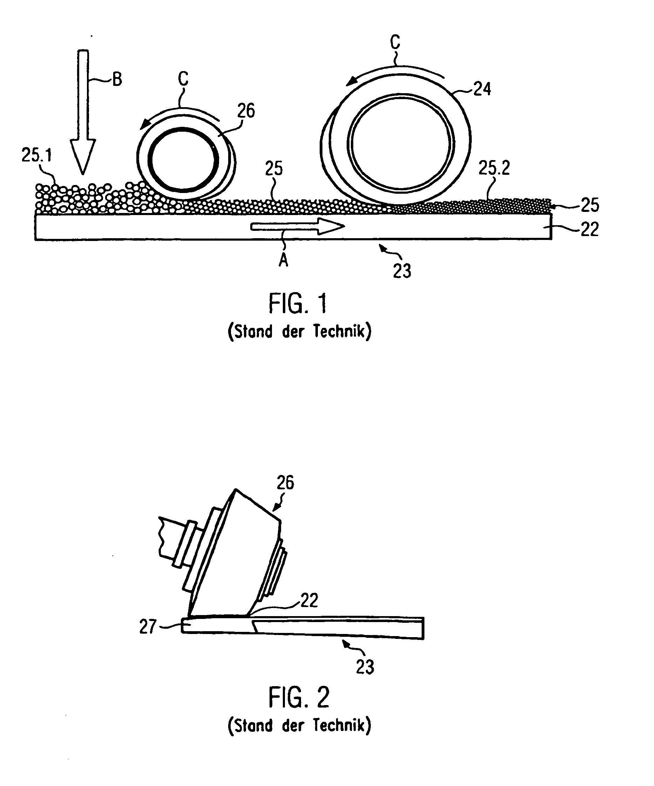

Fig. 1 zeigt die Wirkungsweise eines bekannten Walzenpaares. Eine Mahlwalze 24 und eine Präparationswalze 26 rollen auf einem vom zu zerkleinernden Mahlgut gebildeten Mahlbett 25. Pfeil A gibt die Bewegungsrichtung der Mahlschüssel 23 mit Mahlbahn 22 an. Pfeil B soll die Materialaufgabe verdeutlichen, und die Pfeile C zeigen die Drehrichtung der auf dem Mahlbett 25 abrollenden Mahlwalze 24 und Präparationswalze 26 an. Nach der Materialaufgabe gemäß Pfeil B liegt ein stark belüftetes Mahlbett 25.1 vor, welches nun von der Präparationswalze 26 überrollt wird. Dabei erfolgt nur eine Vorverdichtung und Kompaktierung des Materials mit Bildung eines entlüfteten und verdichteten Mahlbettes 25. Eine Zerkleinerung findet aufgrund der geringen Kräfte unter der Präparationswalze 26 üblicherweise nicht statt. Erst im Mahlspalt zwischen der nachgeschalteten Mahlwalze 24 und der horizontalen Mahlbahn 22 erfolgt die gewünschte Zerkleinerung. Das zerkleinerte Mahlgut 25.2 gelangt anschließend aufgrund der Zentrifugalkräfte über den Schüsselrand und wird mit Hilfe eines Gasstromes pneumatisch zu dem Sichter oberhalb des Mahlraumes gefördert (nicht dargestellt).

Die Mahlwalzen 24 und die kleineren Präparationswalzen 26 sind konisch ausgebildet und im Bereich der kreisrunden Mahlschüssel 23 mit Mahlbahn 22 derart angeordnet, dass ihre Laufflächen möglichst dicht am äußeren Mahlbahnrand 27 beziehungsweise Schüsselrand abrollen und verfügen somit über einen annähernd gleichen Teilkreisradius beziehungsweise Laufring. In Fig. 2 verdeutlicht die Präparationswalze 26 diese bekannte Anordnung.

Bei einer aus DE 42 02 784 C2 bekannten Luftstrom-Wälzmühle mit zwei Walzenpaaren aus jeweils einer Mahlwalze und einer Präparationswalze beziehungsweise Vorverdichtungswalze ist die Drehzahl der Präparationswalzen stufenlos regelbar, um die durch den Mahlvorgang hervorgerufenen Schwingungen der Luftstrom-Wälzmühle auf ein Minimum abzusenken. Mahlwalzen und Präparationswalzen rollen mit ihren Laufflächen dicht an einem Staurand, welcher umlaufend am Außenrand der Mahlschüssel angeordnet ist und die Mahlbahn außenseitig begrenzt.

In DE 44 42 099 C2 beziehungsweise EP 0 792 191 B1 ist eine Wälzmühle beschrieben, bei welcher die Vorverdicht- beziehungsweise Präparationswalzen zur Beeinflussung der Mahlgutbewegung zwischen den Mahlwalzen als Staurollen ausgebildet sind und eine wehrartige Rückhalteeinrichtung beziehungsweise eine rotierende Stauflächenwand bilden. Dadurch soll eine ausreichende Mahlgutversorgung der Mahlwalzen bei einer normalen und auch bei einer erhöhten Mahlgutgeschwindigkeit gesichert und eine höhere Durchsatzleistung mit einem relativ geringen Aufwand gewährleistet werden.

Die Staurollen sind dicht aneinander und an die Mahlwalzen angrenzend angeordnet und rollen wie die Mahlwalzen auf einem Laufring dicht am Mahlschüsselrand. Eine Nivellierung beziehungsweise Vorverdichtung des Mahlbettes erfolgt mit Mantelflächenbereichen der Staurollen, welche zwischen den Stauflächen und Stauringen ausgebildet sind.

Versuche und rechnergestützte DEM-Simulationen sowie Auswertungen von Bildmaterial experimenteller Versuche haben ergeben, dass die bekannte Anordnung der Präparationswalzen am Schüsselaußenrand das vom Zentrum an die Mahlwalzen heranströmende Mahlgut nicht vollständig überrollen und eine Vorverdichtung in der erforderlichen Weise nicht erfolgt. Ein Teilstrom des Mahlgutes, welches spiralförmig vom Zentrum der Mahlschüssel an den Außenrand beziehungsweise zur Mahlbahn bewegt wird, wandert innen an der Stirnseite der Präparationswalzen vorbei und gelangt somit ohne Vorverdichtung zur nachfolgenden Mahlwalze. Es wurde außerdem festgestellt, dass ein Teilstrom des von einer Präparationswalze bereits vorverdichteten Mahlgutes unter Einwirkung der Zentrifugalkraft vor der nachfolgenden Mahlwalze über den Schüsselrand abgeworfen wird und somit nicht mehr durch die nachfolgende Mahlwalze zerkleinert wird. Dieser Mahlgutstrom, welcher die Mahlschüssel jeweils zwischen einer Präparations- und Mahlwalze verlässt, erhöht den inneren Materialumlauf im Mahl- und Sichtraum und erfordert zusätzliche Energie für den pneumatischen Transport zum Sichter. Da dieser Teilstrom noch nicht auf Produktfeinheit vermahlen ist, wird er im Sichter abgewiesen und fällt über einen Grießekonus erneut in das Schüsselzentrum und gelangt auf die Mahlbahn. Unter energetischem Aspekt bedeutet dies, dass nicht nur zusätzliche Energie für den pneumatischen Transport aufgebracht werden muss, sondern auch die Energie aus dem Mahlschüsselantrieb für die Vorverdichtung verlorengeht.

Der Erfindung liegt die Aufgabe zugrunde, eine Wälzmühle mit einer optimierten Partikelbewegung auf der Mahlschüssel und Zuführung des Mahlgutes an die Mahlwalzen zu schaffen und die Effizienz der Zerkleinerung zu erhöhen sowie den Energiebedarf, insbesondere hinsichtlich des pneumatischen Transports der Partikel im Mahl- und Sichtraum, zu senken.

Erfindungsgemäß wird die Aufgabe durch die Merkmale des Anspruchs 1 gelöst, Zweckmäßige und vorteilhafte Ausgestaltungen sind Merkmale der Unteransprüche und in der Figurenbeschreibung beschrieben.

Ein Grundgedanke der Erfindung kann darin gesehen werden, mit Hilfe einer Positionsänderung der Präparationswalzen eine Verdichtung und Kompaktierung des gesamten Mahlgutes, welches einer jeweils nachfolgenden Mahlwalze zugeführt wird, zu erreichen.

Erfindungsgemäß sind die Präparationswalzen zwischen den Mahlwalzen derart positioniert, dass das spiralförmig an die Mahlwalzen herangeführte Mahlgut vollständig überrollt und verdichtet wird.

Es ist vorteilhaft, dass eine nahezu lückenlose Verdichtung durch die Präparationswalzen erreicht wird, wenn diese radial in Richtung Mahlschüsselzentrum verstellt werden und damit mit ihren Laufflächen auf einem kleineren Laufring abrollen als die Mahlwalzen. Die Mahlwalzen sind weiterhin auf der kreisrunden Mahlschüssel derart positioniert, dass ihre Laufflächen randnah und somit dicht am Mahlschüsselrand beziehungsweise an einem Staurand der Mahlschüssel abrollen. Der von den Mahlwalzen beschriebene Laufring ist somit größer als der von den erfindungsgemäß positionierten Präparationswalzen beschriebene Laufring.

Die radial innen positionierten Präparationswalzen ermöglichen nunmehr eine Vorverdichtung des gesamten spiralförmigen Partikelstroms, so dass einer nachfolgenden Mahlwalze nur vorverdichtetes Mahlgut zugeführt wird. Gleichzeitig verhindern die radial nach innen positionierten Präparationswalzen, dass noch nicht genügend zerkleinertes Mahlgut über den Mahlschüsselrand beziehungsweise Staurand gelangt und von einem Gasstrom pneumatisch zur Sichtung transportiert wird, obwohl die erforderliche Feinheit noch nicht erreicht ist.

Zweckmäßigerweise werden die Präparationswalzen mit einem definierten Abstand S von dem äußeren Mahlbahnrand beziehungsweise vom Außenrand der Mahlschüssel oder einem Staurand positioniert, wobei der Abstand S von dem äußeren Mahlbahnrand beziehungsweise Mahlschüsselrand oder Staurand bis zu einer außenseitigen Begrenzung der Lauffläche der Präparationswalzen reicht. In aller Regel ist die Lauffläche der Präparationswalzen ebenso wie die Lauffläche der Mahlwalzen identisch mit deren Walzenmantel.

Der Abstand S der Präparationswalzen vom äußeren Rand der Mahlbahn ist abhängig von den Reibungsverhältnissen auf der Mahlschüssel und kann durch verschiedene Einflussfaktoren, wie beispielsweise Drehzahländerung oder Benetzung des Mahlgutes auf der Mahlbahn mit Flüssigkeit, aber auch durch Anzahl, Größe und Abstand der Mahlwalzen zueinander und zu den Präparationswalzen, variiert werden.

Es wurde gefunden, dass in Abhängigkeit von den Eigenschaften des zu zerkleinernden Mahlgutes, der gewählten Drehzahl der Mahlschüssel und den Anforderungen an die Produktfeinheit ein Abstand S vorteilhaft ist, welcher im Bereich von 25% bis 65% der Laufflächenbreite B der jeweils nachgeschalteten Mahlwalze liegt. Die Laufflächenbereite B ist der Abstand zwischen einer außenseitigen und innenseitigen Begrenzung der Lauffläche beziehungsweise des Walzenmantels der Mahlwalzen.

Es ist von Vorteil, dass der Abstand S der Präparationswalzen durch eine Änderung der Form des Walzenmantels der Präparationswalzen eingestellt werden kann. Der Walzenmantel ist in aller Regel auf einem Walzengrundkörper oder Walzenmantelkern angeordnet und beispielsweise mittels eines Klemmrings lösbar befestigt. Durch eine veränderte Walzenmantelform kann die Lauffläche des Walzenmantels in Richtung Mahltellerzentrum verschoben werden.

In der Regel sind die Präparationswalzen an einem Schwinghebel gelagert und um eine Schwinghebelschwenkachse verschwenkbar. Wenn die Schwinghebelschwenkachse mittels Stehlagern am Mühlengehäuse beziehungsweise Mühlenoberteil befestigt ist, kann eine horizontale Verschiebung des Systems Schwinghebel-Präparationswalze und damit eine veränderte radiale Positionierung der Präparationswalzen im Bereich des Stehlagers beziehungsweise Stehlagergehäuses erfolgen. Beispielsweise können Abstandsbleche, welche zwischen dem Mühlengehäuse und dem Stehlagergehäuse für eine vorgebbare Position der Präparationswalzen montiert wurden, für einen definierten Abstand S demontiert werden, so dass die Präparationswalzen nach radial innen verstellbar sind.

Die radiale Verstellung der Präparationswalzen kann weiterhin im Bereich der Schwinghebelschwenkachse erfolgen, indem die beidseitigen Lagergehäuse der Schwinghebelschwenkachse horizontal verschoben werden.

Die wesentlichen Vorteile der erfindungsgemäßen Wälzmühle bestehen in einer Energieeinsparung bei gleichzeitiger Steigerung der Durchsatzleistung. Versuche an einer Labormühle mit einem äußeren Mahlbahndurchmesser von 36 cm mit unterschiedlichen Abständen S der Präparationswalzen und unterschiedlichen Mahlgütern haben Energieeinsparungen von 4 bis 11 % ergeben. Die Durchsatzleistung konnte bis zu 8% erhöht werden. Diese Werte wurden durch Versuche auf einer Luftstrom-Wälzmühle des LOESCHE-Typs, welche einen äußeren Mahlbahndurchmesser von 5,6 m aufwies, bestätigt. Die Energiereduzierung wird auf Einsparungen am Mahlschüsselantrieb, am Sichterrotorantrieb und auf einen geringeren Energiebedarf für den pneumatischen Feinkorntransport innerhalb des Mahlsystems zurückgeführt.

Die Erfindung wird nachstehend anhand einer Zeichnung weiter erläutert. In dieser zeigen in einer stark schematisierten Darstellung
- Fig. 3: eine erfindungsgemäß positionierte Präparationswalze im Vergleich zu einer zugeordneten Mahlwalze;
- Fig. 4: eine ausschnittsweise perspektivische Darstellung einer Mahlschüssel mit einer Präparationswalze;
- Fig. 5: einen Schwenkhebel der Präparationswalze gemäß Fig. 4;
- Fig. 6: einen Ausschnitt einer erfindungsgemäßen Wälzmühle mit einer alternativ gelagerten Präparationswalze; und
- Fig. 7a, b: eine Seitenansicht einer Präparationswalze mit deren Verstellung im Bereich eines Stehlagers.

Figuren 1 und 2 zeigen den Stand der Technik. Fig. 1 verdeutlicht die prinzipielle Wirkungsweise eines Walzenpaares, bestehend aus einer Mahlwalze 24 und einer Präparationswalze 26, welche bereits beschrieben wurde.

Fig. 2 zeigt in einer Ansicht die bekannte Anordnung einer Präparationswalze 26 am äußeren Mahlbahnrand 27 und damit auf dem nahzu identischen Laufring wie die nachgeschaltete Mahlwalze (nicht dargestellt).

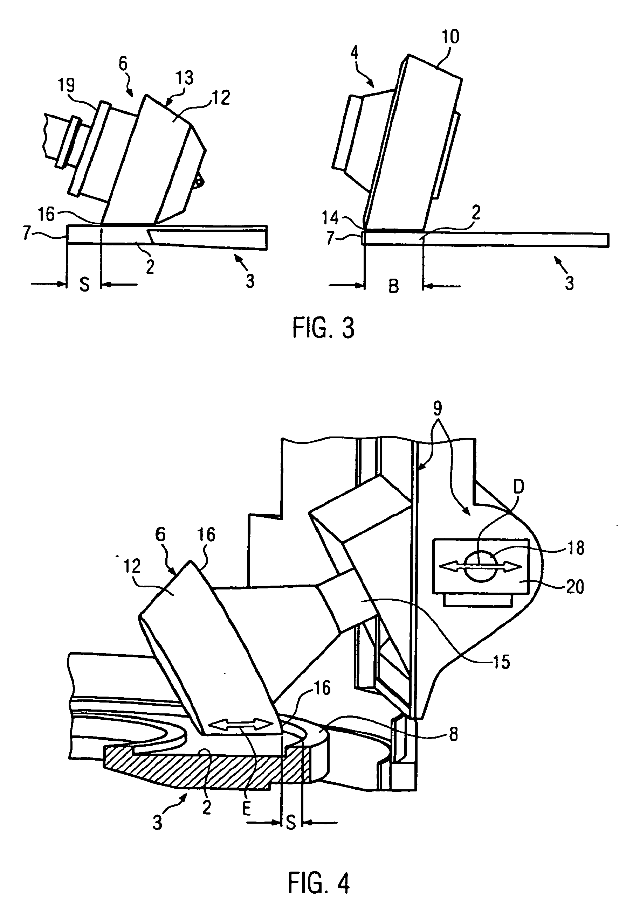

Fig. 3 zeigt eine erfindungsgemäße Präparationswalze 6, welche derart positioniert ist, dass das spiralförmig an eine zugeordnete Mahlwalze 4 herangeführte Mahlgut (nicht dargestellt) vollständig überrollt und verdichtet wird.

Die Mahlwalze 4 und die Präparationswalze 6 sind konische Walzen, welche auf einer ebenen Mahlbahn 2 unter Ausbildung eines parallelen Mahlspaltes abrollen. Fig. 3 verdeutlicht, dass die Präparationswalzen 6 kleiner als die Mahlwalzen 4 ausgebildet sind, da sie nur zur Präparation und nicht zur Vermahlung des zugeführten Mahlgutes (nicht dargestellt) dienen.

Während die Mahlwalze 4 derart auf der Mahlschüssel 3 beziehungsweise deren Mahlbahn 2 angeordnet ist, dass eine außenseitige Begrenzung 14 der Lauffläche 10 der Mahlwalze 4 dicht am äußeren Mahlbahnrand 7 abrollt, ist die Präparationswalze 6 mit einer außenseitigen Begrenzung 16 ihrer Lauffläche 12 in einem Abstand S vom äußeren Mahlbahnrand 7 positioniert. Im Ausführungsbeispiel der Fig. 3 sind die Positionen der Präparationswalze 6 und der zugeordneten Mahlwalze 4 nebeneinander dargestellt. Der Abstand S für die erfindungsgemäße Positionierung der Präparationswalze 6 beträgt etwa 50% der Breite B der Lauffläche 10 der Mahlwalze 4. Fig. 3 verdeutlicht in Verbindung mit Fig. 2, dass die in Richtung Mahlschüsselzentrum veränderte Position der Präparationswalze 6 durch eine veränderte Form des Walzenmantels 13 auf einem Walzengrundkörper beziehungsweise Walzenmantelkern 19 realisiert werden kann.

Fig. 4 zeigt eine Mahlschüssel 3 mit einem Staurand 8 am Außenumfang und einer Mahlbahn 2 sowie eine Präparationswalze 6, welche im Abstand S vom Staurand 8 positioniert ist.

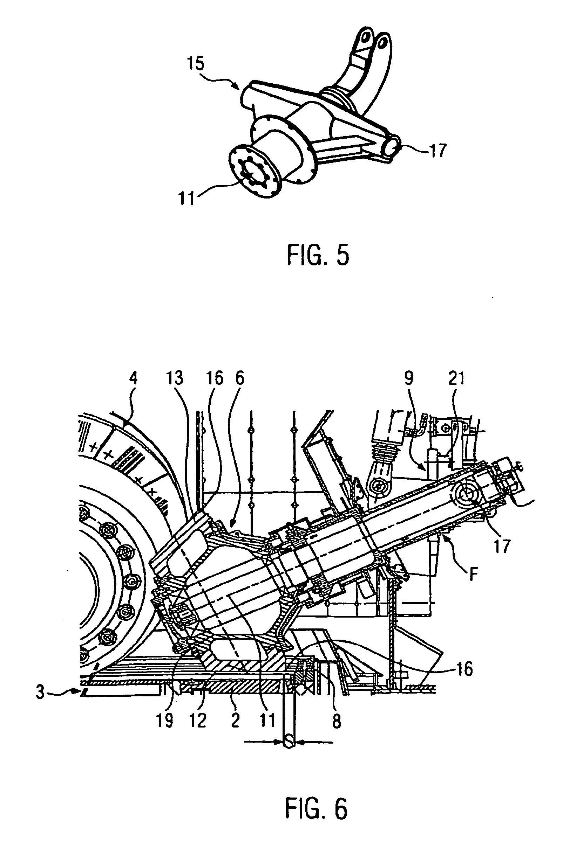

Die Präparationswalze 6 ist an einem Schwinghebel 15 gelagert, welcher mit seiner Schwinghebelschwenkachse 17 (siehe auch Fig. 5) in seitlichen Lagern mit Lagergehäusen 20 über eine Welle (nicht dargestellt) am Mühlengehäuse 9 gelagert ist.

Eine radial veränderte Positionierung der Präparationswalze 6 kann in Abhängigkeit von dem zu zerkleinernden Mahlgut, der Drehzahl der Mahlschüssel und veränderten Anforderungen an die Produktfeinheit über die seitlichen Lagergehäuse 20 der Schwinghebelschwenkachse 17 erfolgen. Nach Lösen einer Klemmung am Mühlengehäuse 9 können die seitlichen Lagergehäuse 20 horizontal verschoben werden (siehe Doppelpfeil D), so dass nach dem Langlochprinzip mit Deckblech der Schwinghebel 15 und die Präparationswalze 6 ebenfalls horizontal auf der Mahlbahn 2 verschoben werden (siehe Doppelpfeil E).

Fig. 6 zeigt einen Ausschnitt einer Wälzmühle mit einer Mahlwalze 4 und einer vorgeschalteten Präparationswalze 6. Die Präparationswalze 6 ist im Abstand S von einem Staurand 8 am Außenumfang der Mahlschüssel 3 positioniert.

Die im Schnitt gezeigte Präparationswalze 6 weist einen Walzenmantel 13 auf, welcher auf einem Walzengrundkörper beziehungsweise Walzenmantelkern 19 befestigt ist. Die Präparationswalze 6 läuft mit ihrer Lauffläche 12 auf einem kleineren Laufring ab, als die Mahlwalze 4.

Eine horizontale Verstellung oder Verschiebung des Systems Präparationswalze 6/Schwinghebel 15 mit Schwinghebelschwenkachse 17 kann im Bereich der Befestigung eines Stehlagergehäuses 21 für den Schwinghebel 15 durchgeführt werden. In Stehlagern (nicht dargestellt) ist die Schwinghebelschwenkachse 17 gelagert. Indem Abstandsbleche (nicht dargestellt), welche zwischen dem Stehlagergehäuse 21 und dem Mühlengehäuse 9 gemäß Pfeil F eingefügt waren, entfernt wurden, konnte der Abstand S der Präparationswalze 6 entsprechend den Erfordernissen vorteilhaft vor Ort eingestellt werden.

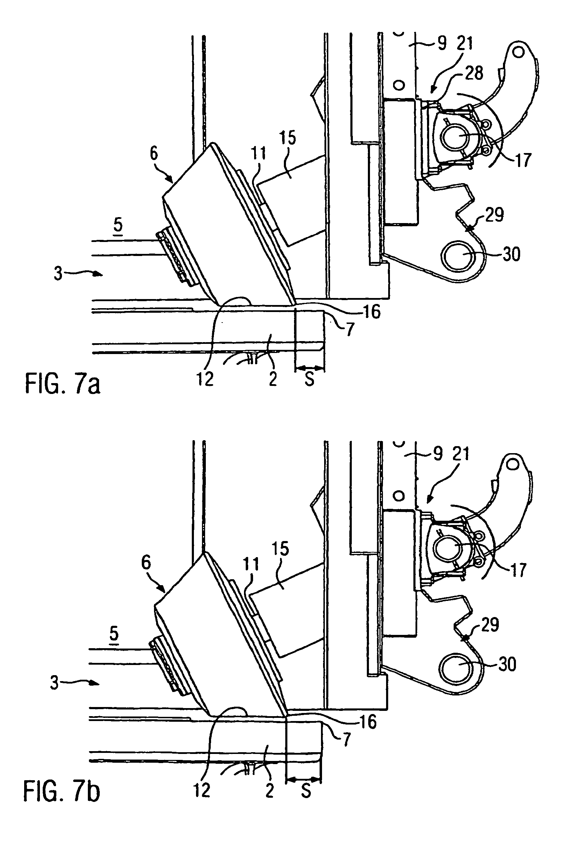

Die Figuren 7a und 7b zeigen jeweils eine Präparationswalze 6, welche an einem Deckel 29 des Mühlengehäuses 9 befestigt und mit diesem um eine Drehachse 20 aus dem Mahlraum 5 ausschwenkbar ist. Die Schwinghebelachse 17 des Schwinghebels 15 der Präparationswalze 6 ist in einem Stehlager 21 gelagert und in Fig. 7a über ein Abstandsblech 28 positioniert. Daraus ergibt sich ein Abstand S vom äußeren Mahlbahnrand 7 der Mahlschüssel 3, welche in dieser Darstellung keinen erhöhten Staurand aufweist.

In Fig. 7b ist das Abstandsblech entfernt, so dass die Präparationswalze 6 radial nach innen verstellt ist und der Abstand S zwischen dem äußeren Mahlbahnrand 7 und der außenseitigen Begrenzung 16 der Lauffläche 12 der Präparationswalze 6 größer als im Beispiel nach Fig. 7a ist.

## Patentansprüche

1. Wälzmühle
mit einer nahezu horizontalen Mahlbahn (2) auf einer rotierenden Mahlschüssel (3),
mit stationären, drehbaren Mahlwalzen (4), welche auf einem von zu zerkleinerndem Mahlgut auf der Mahlbahn (2) gebildeten Mahlbett abrollen, und mit stationären, drehbaren Präparationswalzen (6) zwischen den Mahlwalzen (4), welche das Mahlgut verdichten und entlüften,
**dadurch gekennzeichnet,**
**dass** die Präparationswalzen (6) derart positioniert sind, dass das spiralförmig an die Mahlwalzen (4) herangeführte Mahlgut von den Präparationswalzen (6) vollständig überrollt und verdichtet wird.

2. Wälzmühle nach Anspruch 1,
**dadurch gekennzeichnet,**
**dass** die Präparationswalzen (6), in einer Draufsicht auf die Mahlschüssel (3) gesehen, radial in Richtung Mahlschüsselzentrum positioniert sind und mit ihren Laufflächen (12) auf einem kleineren Laufring abrollen als die Mahlwalzen (4).

3. Wälzmühle nach Anspruch 1 oder 2,
**dadurch gekennzeichnet,**
**dass** die Präparationswalzen (6) in radialer Richtung mit einem Abstand S von einem äußeren Mahlbahnrand (7) beziehungsweise von einem Staurand (8) der Mahlschüssel (3) positioniert sind und der Abstand S sich zwischen dem äußeren Mahlbahnrand (7) beziehungsweise dem Staurand (8) der Mahlschüssel (3) und einer außenseitigen Begrenzung (16) der Lauffläche (12) der Präparationswalzen (6) erstreckt.

4. Wälzmühle nach einem der vorhergehenden Ansprüche,
**dadurch gekennzeichnet,**
**dass** die Mahlwalzen (4) derart angeordnet sind, dass sie mit einer außenseitigen Begrenzung (14) ihrer Laufflächen (10) bis nahezu an den äußeren Mahlbahnrand (7) beziehungsweise an den Staurand (8) der Mahlschüssel (3) reichen.

5. Wälzmühle nach einem der vorhergehenden Ansprüche 3 oder 4,
**dadurch gekennzeichnet,**
**dass** die Positionierung der Präparationswalzen (6) im Abstand S unter Berücksichtigung der Eigenschaften des zu zerkleinernden Mahlgutes, von Anzahl, Größe und Abstand der Mahlwalzen (4), der Drehzahl der Mahlschüssel (3) und von der geforderten Produktfeinheit vorgebbar ist.

6. Wälzmühle nach einem der vorhergehenden Ansprüche 3 bis 5,
**dadurch gekennzeichnet,**
**dass** die Präparationswalzen (6) mit einem Abstand S positioniert sind, welcher 25% bis 65% der Breite B der Laufflächen (10) der zugeordneten Mahlwalzen (4) beträgt.

7. Wälzmühle nach einem der vorhergehenden Ansprüche 3 bis 6,
**dadurch gekennzeichnet,**
**dass** der Abstand S der Präparationswalzen (6) durch eine veränderte Form des Walzenmantels (13) auf einem Walzengrundkörper beziehungsweise Walzenmantelkern (19) der Präparationswalzen (6) einstellbar ist.

8. Wälzmühle nach einem der vorhergehenden Ansprüche,
**dadurch gekennzeichnet,**
**dass** die Präparationswalzen (6) einen kleineren Walzendurchmesser als die Mahlwalzen (4) aufweisen und einzeln über einen Schwinghebel (15) im Bereich des Mühlengehäuses (9) gelagert sind.

9. Wälzmühle nach einem der vorhergehenden Ansprüche,
**dadurch gekennzeichnet,**
**dass** der radiale Abstand der Präparationswalzen (6) vom Mahlschüsselzentrum durch Verstellung ihrer Walzenachsen (11) im Schwinghebel (15) und/oder im Bereich der Schwinghebelschwenkachsen (17) und/oder im Bereich der Lager (18, 21) beziehungsweise Lagergehäuse (20) der Schwinghebel (15) am Mühlengehäuse (9), beispielsweise mittels Abstandsblechen (28) zwischen dem Stehlagergehäuse (20) und dem Mühlengehäuse (9), einstellbar ist.

10. Wälzmühle nach einem der vorhergehenden Ansprüche,
dass zwei, drei, vier, fünf, sechs oder mehr Mahlwalzen (4) angeordnet sind und jeder Mahlwalze (4) wenigstens eine Präparationswalze (6), welche auf einem kleineren Laufring als die Mahlwalzen (4) abrollen, vorgeschaltet ist.

## Claims

1. Roller mill
having a virtually horizontal grinding track (2) on a rotating grinding pan (3), having stationary, rotatable grinding rollers (4) which roll on a grinding bed formed by grinding material to be comminuted on the grinding track (2), and having stationary, rotatable preparation rollers (6) between the grinding rollers (4) which compress and remove air from the grinding material, **characterised in that**
the preparation rollers (6) are positioned in such a way that the grinding material fed spirally to the grinding rollers (4) is completely rolled over and compressed by the preparation rollers (6).

2. Roller mill according to claim 1
**characterised in that**
the preparation rollers (6), seen in a top view of the grinding pan (3), are positioned radially in the direction of the grinding pan centre and roll with their running surfaces (12) on a smaller running ring than the grinding rollers (4).

3. Grinding roller according to claim 1 or 2,
**characterised in that**
the preparation rollers (6) are positioned in a radial direction at a distance S from an outer grinding track edge (7) or from a retention rim (8) of the grinding pan (3) and the distance S extends between the outer grinding track edge (7) or the retention rim (8) of the grinding pan (3) and an outer side delimitation (16) of the running surface (12) of the preparation rollers (6).

4. Roller mill according to one of the preceding claims,
**characterised in that**
the grinding rollers (4) are arranged in such a way that they reach with an outer side delimitation (14) of their running surfaces (10) virtually as far as the outer grinding track edge (7) or the retention rim (8) of the grinding pan (3).

5. Roller mill according to one of the preceding claims 3 or 4,
**characterised in that**
the positioning of the preparation rollers (6) at a distance S under consideration of the properties of the grinding material to be comminuted can be predefined by the number, size and distance of the grinding rollers (4), the rotational speed of the grinding pan (3) and the required product fineness:

6. Roller mill according to one of the preceding claims 3 to 5,
**characterised in that**
the preparation rollers (6) are positioned at a distance S which amounts to 25% to 65% of the width B of the running surfaces (10) of the assigned grinding rollers (4).

7. Roller mill according to one of the preceding claims 3 to 6,
**characterised in that**
the distance S of the preparation rollers (6) can be adjusted through a change in form of the roller shell (13) on a roller base body or roller shell core (19) of the preparation rollers (6).

8. Roller mil according to one of the preceding claims,
**characterised in that**
the preparation rollers (6) have a smaller roller diameter than the grinding rollers (4) and are individually mounted via a rocker arm (15) in the region of the mill housing (9).

9. Roller mill according to one of the preceding claims,
**characterised in that**
the radial distance of the preparation rollers (6) from the grinding pan centre can be adjusted through adjustment of their roller shafts (11) in the rocker arm (15) and / or in the region of the rocker arm pivot shafts (17) and / or in the region of the bearings (18, 21) or bearing housings (20) of the rocker arms (15) on the mill housing (9), for example by means of spacer plates (28) between the pillow block bearing housing (20) and the mill housing (9).

10. Roller mill according to one of the preceding claims,
**characterised in that**
two, three, four, five, six or more grinding rollers (4) are arranged and at least one preparation roller (6) is arranged before each grinding roller (4), which preparation roller (6) rolls on a smaller running ring than the grinding rollers (4).

## Revendications

1. Broyeur à rouleaux
avec une piste de broyage (2) sensiblement horizontale sur un bac de broyage (3) rotatif,
avec des rouleaux de broyage (4) stationnaires rotatifs qui roulent sur un lit de broyage formé par un produit à broyer sur la piste de broyage (2), et
avec des rouleaux de préparation (6) stationnaires rotatifs entre les rouleaux de broyage (4), qui compriment et débarrassent de son air le produit à broyer,
**caractérisé**
**en ce que** les rouleaux de préparation (6) sont positionnés de telle manière que le produit à broyer alimenté en spirale au niveau des rouleaux de broyage (4) est écrasé et comprimé par les rouleaux de préparation (6).

2. Broyeur à rouleaux selon la revendication 1,
**caractérisé**
**en ce que** les rouleaux de préparation (6), en vue de dessus du bac de broyage (3), sont positionnés radialement en direction du centre du bac de broyage et roulent avec leurs surfaces de roulement (12) sur un anneau de roulement plus petit que les rouleaux de broyage (4).

3. Broyeur à rouleaux selon la revendication 1 ou 2,
**caractérisé**
**en ce que** les rouleaux de préparation (6) sont positionnés dans la direction radiale à une distance S d'un bord extérieur (7) de la piste de broyage, ou plus particulièrement d'un bord d'accumulation (8) du bac de broyage (3), et en ce que la distance S s'étend entre le bord extérieur (7) de la piste de broyage, ou plus particulièrement le bord d'accumulation (8) du bac de broyage (3) et une limitation extérieure (16) de la surface de roulement (12) des rouleaux de préparation (6).

4. Broyeur à rouleaux selon l'une des revendications précédentes,
**caractérisé**
**en ce que** les rouleaux de broyage (4) sont agencés de telle manière qu'ils arrivent avec une limitation extérieure (14) de leurs surfaces de roulement (10) sensiblement jusqu'à un bord extérieur (7) de la piste de broyage, ou plus particulièrement le bord d'accumulation (8) du bac de broyage (3).

5. Broyeur à rouleaux selon l'une des revendications précédentes 3 ou 4,
**caractérisé**
**en ce que** le positionnement des rouleaux de préparation (6) à la distance S peut être imposé en tenant compte des propriétés du produit à broyer, du nombre, de la taille et de la distance des rouleaux de broyage (4), de la vitesse de rotation du bac de broyage (3) et de la finesse exigée du produit.

6. Broyeur à rouleaux selon l'une des revendications précédentes 3 à 5,
**caractérisé**
**en ce que** les rouleaux de préparation (6) sont positionnés à une distance S qui vaut 25 % à 65 % de la largeur B des surfaces de roulement (10) des rouleaux de broyage (4) associés.

7. Broyeur à rouleaux selon l'une des revendications précédentes 3 à 6,
**caractérisé**
**en ce que** la distance S des rouleaux de préparation (6) peut être ajustée par une forme modifiée de l'enveloppe de rouleau (13) sur un corps de base de rouleau ou d'âme d'enveloppe de rouleau (19) des rouleaux de préparation (6).

8. Broyeur à rouleaux selon l'une des revendications précédentes,
**caractérisé**
**en ce que** les rouleaux de préparation (6) présentent un diamètre de rouleau plus petit que les rouleaux de broyage (4) et sont montés individuellement sur un levier oscillant (15) au niveau du boîtier de broyeur (9).

9. Broyeur à rouleaux selon l'une des revendications précédentes,
**caractérisé**
**en ce que** la distance radiale des rouleaux de préparation (6) depuis le centre du bac de broyage peut être ajustée par déplacement de leurs axes de rouleau (11) dans le levier oscillant (15) et/ou au niveau des axes de pivotement (17) des leviers oscillants et/ou au niveau des paliers (18, 21) ou du boîtier de palier (20) des leviers oscillants (15) sur le boîtier de broyeur (9), par exemple au moyen de tôles d'écartement (28) entre le boîtier de palier fixe (20) et le boîtier de broyeur (9).

10. Broyeur à rouleaux selon l'une des revendications précédentes,
**caractérisé**
**en ce que** deux, trois, quatre, cinq, six ou plus rouleaux de broyage (4) sont agencés et chaque rouleau de broyage (4) est précédé d'un rouleau de préparation (6), lesquels roulent sur un anneau de roulement plus petit que les rouleaux de broyage (4).
